# EUROPEAN PATENT APPLICATION

(11) **EP 4 660 397 A1**
(43) Date of publication of application: **10.12.2025**
(21) Application number: 23928243.7
(22) Date of filing: 25.07.2023
(51) Int. Cl.: E04H 12/24, H02G 7/20, E04H 12/10

(54) **CROSSARM ASSEMBLY AND POWER TRANSMISSION TOWER**

(30) Priority: 22.03.2023 CN 202310282052
(71) Applicant: Shanghai Shemar Power Engineering Co., Ltd., Changning, Shanghai 200050 (CN)
(72) Inventor: WANG, Xinlong, Shanghai 200050 (CN); LI, Yanlin, Shanghai 200050 (CN); WANG, Chen, Shanghai 200050 (CN)
(74) Representative: Mewburn Ellis LLP
(86) International application number: PCT/CN2023/109111
(87) International publication number: WO 2024/192938

(57) **Abstract**

The present application relates to a crossarm assembly and a power transmission tower. The crossarm assembly comprises a fitting assembly; a first insulator, wherein one end of the first insulator is connected to the fitting assembly; a second insulator, wherein one end of the second insulator is connected to the fitting assembly, and the second insulator is located below the first insulator; a first hinge piece, connected to the other end of the first insulator, wherein the first hinge piece is used for being connected to a tower body of the power transmission tower, and the first insulator can rotate relative to the tower body of the power transmission tower; and a second hinge piece, connected to the other end of the second insulator, wherein the second hinge piece is used for being connected to the tower body of the power transmission tower, and the second insulator can rotate relative to the tower body of the power transmission tower. When the crossarm assembly of the present application is subjected to unbalanced tension of a wire, the crossarm assembly can rotate, thereby improving the safety and the service life of the crossarm assembly and the power transmission tower.

## Description

### TECHNICAL FIELD

The present disclosure relates to the field of power transmission equipment, and in particular, to a crossarm assembly and a power transmission tower.

### BACKGROUND

Transmission lines are closely related to national economy and people's livelihood. Overhead lines are the most common form of the transmission lines, in which a fixed crossarm is extended from a tower body to mount conductors. For a tangent tower, a tower body and a crossarm may bear longitudinal unbalanced tension under operating conditions of strong wind, uneven icing, conductor breakage, and the like.

A reciprocating unbalanced tension may have adverse effects on the crossarm and a tower body structure. In addition, in the event of extreme weather or disconnection accidents, a large unbalanced tension may cause hidden dangers to safety of the crossarm and the tower body as a whole. In order to ensure the safety, there is a need to set a large design redundancy, thereby sacrificing economy of the crossarm.

### SUMMARY

Based on the above problems, the present disclosure provides a crossarm assembly and a power transmission tower to facilitate the release of unbalanced tension.

An embodiment of the present disclosure provides a crossarm assembly, including: a fitting assembly; a first insulator having an end connected to the fitting assembly; a second insulator having an end connected to the fitting assembly, the second insulator being located below the first insulator; a first hinged member connected to another end of the first insulator, the first hinged member being configured to connect a tower body of a power transmission tower, and the first insulator being rotatable relative to the tower body of the power transmission tower; and a second hinged member connected to another end of the second insulator, the second hinged member being configured to connect the tower body of the power transmission tower, and the second insulator being rotatable relative to the tower body of the power transmission tower.

According to some embodiments of the present disclosure, the fitting assembly includes: a first fitting, the first insulator and the second insulator being both connected to the first fitting; a mounting string having an end connected to the first fitting; a mounting plate connected to another end of the mounting string; and a clamp arranged on the mounting plate.

According to some embodiments of the present disclosure, the first fitting includes: a sleeve configured to connect the second insulator; a flange arranged at an end of the sleeve; a first connecting plate arranged on an outer wall of the sleeve, the first connecting plate being connected to the first insulator; a second connecting plate arranged on the outer wall of the sleeve, the second connecting plate being configured to connected to a voltage equalizing device; and a third connecting plate arranged on the outer wall of the sleeve, the third connecting plate being connected to the mounting string.

According to some embodiments of the present disclosure, the outer wall of the sleeve is provided with a rib.

According to some embodiments of the present disclosure, the second connecting plate is provided with a temporary guy wire hole.

According to some embodiments of the present disclosure, the fitting assembly includes: a second fitting, the first insulator and the second insulator being both connected to the second fitting; and a clamp arranged on the second fitting.

According to some embodiments of the present disclosure, the second fitting includes a first clamping plate and a second clamping plate arranged parallel to each other, the first clamping plate and the second clamping plate each include: a first supporting portion and a second supporting portion, the second supporting portion being located below the first supporting portion; and a bending portion, the first supporting portion and the second supporting portion being connected to two ends of the bending portion respectively. The bending portion of the first clamping plate and the bending portion of the second clamping plate clamp an end portion of the first insulator connected to the second fitting and an end portion of the second insulator connected to the second fitting.

According to some embodiments of the present disclosure, the end portion of the second insulator is provided with a connecting plate, and the bending portion of the first clamping plate and the bending portion of the second clamping plate clamp the connecting plate.

According to some embodiments of the present disclosure, the bending portion is provided with a first insulator connecting hole and a second insulator connecting hole which are configured to connect the first insulator and the second insulator respectively.

According to some embodiments of the present disclosure, both the first supporting portion and the second supporting portion are provided with mounting holes configured to connect the clamp.

According to some embodiments of the present disclosure, the first supporting portion is provided with a third voltage equalizing device mounting hole configured to mount a third voltage equalizing device; and the second supporting portion is provided with a fourth voltage equalizing device mounting hole configured to mount a fourth voltage equalizing device.

According to some embodiments of the present disclosure, the crossarm assembly further includes: at least one third voltage equalizing device having a closed annular structure or non-closed arc structure, the third voltage equalizing device being arranged on the fitting assembly; and/or at least one fourth voltage equalizing device having a non-closed arc structure, the fourth voltage equalizing device being arranged on the fitting assembly.

According to some embodiments of the present disclosure, a rotation axis of the first insulator is collinear with a rotation axis of the second insulator, and the rotation axis of the first insulator and the rotation axis of the second insulator are both inclined relative to a vertical direction.

According to some embodiments of the present disclosure, the rotation axis of the first insulator and the rotation axis of the second insulator are both inclined by 10° to 30° relative to the vertical direction.

According to some embodiments of the present disclosure, an axis of the second insulator is inclined upwards relative to a horizontal direction or arranged along the horizontal direction.

According to some embodiments of the present disclosure, the axis of the second insulator is inclined upwards by 1° to 30° relative to the horizontal direction.

According to some embodiments of the present disclosure, the first hinged member and the second hinged member each include: a base configured to connect the tower body of the power transmission tower; and a rotating block rotatably arranged on the base. The rotating block of the first hinged member is connected to the first insulator, and the rotating block of the second hinged member is connected to the second insulator.

According to some embodiments of the present disclosure, the base includes a first base and a second base, the first base and the second base are connected to the tower body of the power transmission tower respectively, a rotation space is formed between the first base and the second base, and the rotating block is located in the rotation space.

An embodiment of the present disclosure provides a power transmission tower, including: a tower body; and the crossarm assembly as described above, the crossarm assembly being arranged on the tower body.

According to some embodiments of the present disclosure, the tower body includes a main body and a support frame, the support frame being arranged on a side wall of the main body, and the support frame including: a support rod having an end connected to the main body; and an end block connected to another end of the support rod, the first hinged member being arranged on the end block.

The crossarm assembly according to the present disclosure is rotatable when subjected to unbalanced tension of conductors on two sides, so as to release the unbalanced tension, which prevents the crossarm assembly or the tower body from bearing large loads, improves safety and prolongs lifetime of the power transmission tower, and reduces the cost of the crossarm assembly.

### BRIEF DESCRIPTION OF THE DRAWINGS

In order to more clearly illustrate the solutions in the present disclosure, the accompanying drawings used in the description of the embodiments are briefly introduced below. It is apparent that, the accompanying drawings in the following description illustrate only some embodiments of the present disclosure, and those of ordinary skill in the art can obtain other drawings according to the accompanying drawings without going beyond the scope of the present disclosure.
FIG. 1 is a schematic view of a power transmission tower according to embodiments of the present disclosure;
FIG. 2 is a schematic view of a crossarm assembly according to embodiments of the present disclosure;
FIG. 3 is a schematic view of a first fitting according to embodiments of the present disclosure;
FIG. 4 is a schematic view of the first fitting and a second insulator according to embodiments of the present disclosure;
FIG. 5 is a schematic view of another power transmission tower according to embodiments of the present disclosure;
FIG. 6 is a schematic view of another crossarm assembly according to embodiments of the present disclosure;
FIG. 7 is a schematic view of a second fitting according to embodiments of the present disclosure;
FIG. 8 is a schematic view of a clamping plate according to embodiments of the present disclosure;
FIG. 9 is a schematic view of a connecting plate of the second insulator according to embodiments of the present disclosure;
FIG. 10 is a schematic view of a hinged member according to embodiments of the present disclosure; and
FIG. 11 is a schematic view of a support frame according to embodiments of the present disclosure.

### DETAILED DESCRIPTION OF THE EMBODIMENTS

The solutions of the present disclosure are described clearly and completely below with reference to the accompanying drawings in the embodiments of the present disclosure. It is apparent that the described embodiments are merely some of rather than all of the embodiments of the present disclosure. All other embodiments acquired by those skilled in the art without creative efforts based on the embodiments in the present disclosure fall within the scope of the present disclosure.

In an overhead transmission line, a fixed crossarm generally protrudes from a tower body to mount conductors. Compared with conventional iron crossarms, porcelain crossarms, and the like, composite crossarms have advantages of lightning protection, bird damage prevention, and long lifetime. A conductor mounted by using the composite crossarm is directly suspended on a node fitting of the composite crossarm through a fitting string with a certain length, to achieve purposes of lifting the conductor, reducing a nominal height, compressing an interlayer spacing, reducing a width of corridor, and the like.

In a transmission line, due to a complex wind load, ice load, or the like, the conductor may produce a reciprocating unbalanced tension, which may have an adverse effect on the crossarm and the tower body. Moreover, when the composite crossarm is applied, there is a need to calculate a length of the fitting string according to a conductor breaking tension. In an extreme operating condition, the conductor breaking tension is high, and there is a need to increase the length of the fitting string or a design load to ensure structural safety, and thus, a size of the composite crossarm has to be increased, thereby reducing the economy of the composite crossarm.

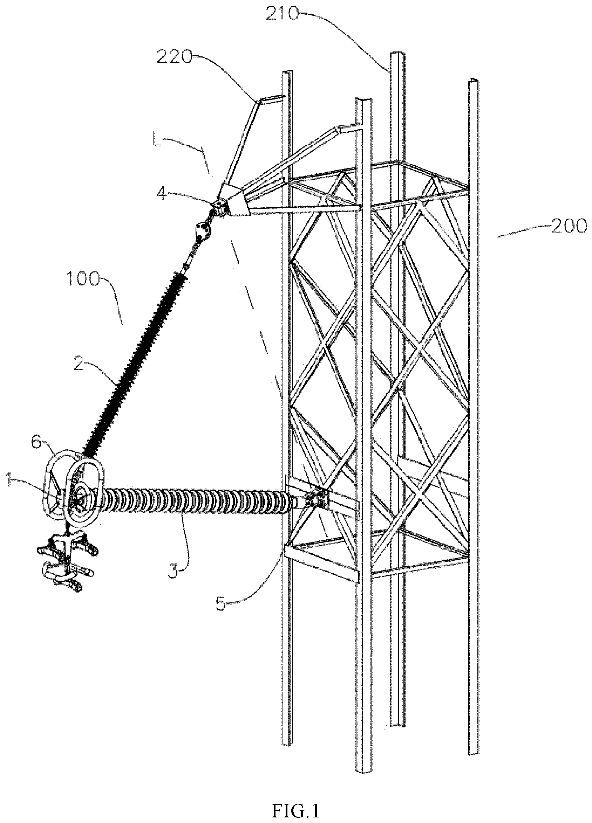

As shown in FIG. 1, embodiments of the present disclosure provide a crossarm assembly 100. The crossarm assembly 100 is rotatably arranged on a tower body 200 of a power transmission tower. The crossarm assembly 100 is configured to mount a conductor. The crossarm assembly 100 may be affected by factors, such as a wind load, during actual operation, which may cause an unbalanced tension in the conductor. In this case, the crossarm assembly 100 may rotate to a side where tension of the conductor is greater, so that parameters such as a span between the conductors on two sides (a horizontal distance between conductor suspension points of two adjacent power transmission towers) may change. That is, when a conductor hanging end on the crossarm assembly 100 displaces until the conductor hanging end deflects to a certain position, the tensions of the conductors on the two sides reach a new balance, so as to release the unbalanced tension and improve safety of the transmission line.

The crossarm assembly 100 includes a fitting assembly 1, a first insulator 2, a second insulator 3, a first hinged member 4, and a second hinged member 5. The fitting assembly 1 is configured to mount the conductors. Optionally, the conductor is a conductor bundle, and the number of conductor bundling may be set as required.

The first insulator 2 is inclined downwards from the tower body 200, an end of the first insulator 2 is connected to the fitting assembly 1, and the first insulator 2 is configured to suspend the fitting assembly 1. Another end of the first insulator 2 is connected to the first hinged member 4, and the first hinged member 4 is arranged on the tower body 200, so that the first insulator 2 is rotatable relative to the tower body 200.

The second insulator 3 is located below the first insulator 2. An end of the second insulator 3 is connected to the fitting assembly 1, and the second insulator 3 is configured to support the fitting assembly 1. Another end of the second insulator 3 is connected to the second hinged member 5, and the second hinged member 5 is arranged on the tower body 200, so that the second insulator 3 is rotatable relative to the tower body 200.

Optionally, each of the first insulator 2 and the second insulator 3 includes an insulating body and a shed housing covering a periphery of the insulating body. An end portion of the insulating body is connected to a metal attachment. The metal attachment may be a fitting or a metal member for connection. The insulating body is a solid rod or hollow tube made of a composite material. In an embodiment, the first insulator 2 is a line composite insulator, and the second insulator 3 is a post composite insulator.

In the crossarm assembly 100 according to this embodiment, the conductor is mounted through the fitting assembly 1, the first insulator 2 and the second insulator 3 are rotatable relative to the tower body 200, and when the crossarm assembly 100 is subjected to unbalanced tension of the conductor, the crossarm assembly 100 can release the unbalanced tension by rotation, so that damages to the crossarm assembly 100 and the tower body 200 can be avoided.

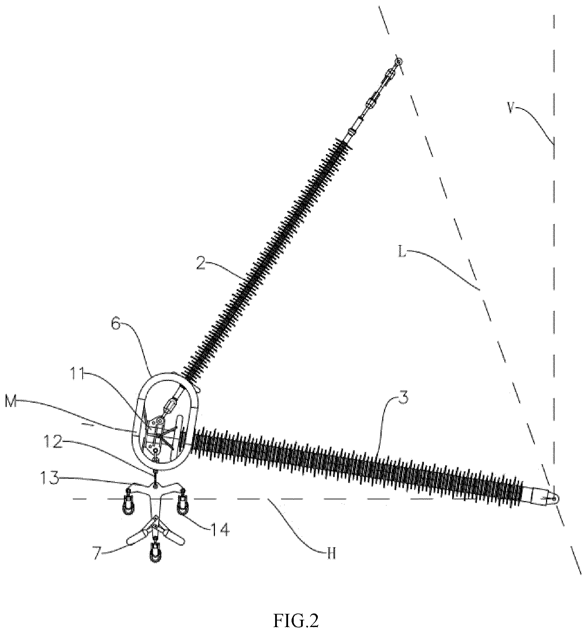

As shown in FIG. 2, in some embodiments, the fitting assembly 1 includes a first fitting 11, a mounting string 12, a mounting plate 13, and a clamp 14. In FIG. 2, H denotes a horizontal direction, and V denotes a vertical direction.

Both an end portion of the first insulator 2 and an end portion of the second insulator 3 are connected to the first fitting 11. Optionally, the end portion of the first insulator 2 is connected to the first fitting 11 through a fastener. The end portion of the first insulator 2 connected to the first fitting 11 is provided with a first voltage equalizing device, and the first voltage equalizing device functions to equalize an electric field.

The mounting string 12 has an end connected to the first fitting 11 and another end connected to the mounting plate 13. The mounting string 12 is suspended below the first fitting 11. Optionally, an existing mounting string is selected as the mounting string 12. The mounting plate 13 is suspended on the mounting string 12. The clamp 14 is arranged on the mounting plate 13, and the clamp 14 is configured to fix the conductor. The number of the clamp 14 and a shape of the mounting plate 13 are correspondingly set according to a requirement on the number of conductor bundling.

Optionally, the mounting plate 13 is a T-shaped plate, a top end of the mounting plate 13 is connected to the mounting string 12, and two side ends and a bottom end of the mounting plate 13 are configured to connect the clamp 14.

Due to gravitational effects of the conductor, the fitting assembly 1, the first insulator 2, and the second insulator 3, there is a certain resistance between rotating members of the first hinged member 4 and between rotating members of the second hinged member 5, which hinders rotation of the rotating members. When the unbalanced tension on the crossarm assembly 100 is small, due to resistance of the rotating members, the crossarm assembly 100 may not rotate, which prevents unnecessary deflection of the first insulator 2 and the second insulator 3 under slight disturbances. When the unbalanced tension on the crossarm assembly 100 further increases, the mounting string 12, the mounting plate 13, and the clamp 14 deflect appropriately relative to the first fitting 11, and the first insulator 2 and the second insulator 3 may not rotate, so as to reduce an influence of a fatigue effect on the first insulator 2 and the second insulator 3. When the unbalanced tension on the crossarm assembly 100 further increases again, the first insulator 2 and the second insulator 3 rotate to release the unbalanced tension. Through the cooperation of the first fitting 11, the mounting string 12, the mounting plate 13, and the clamp 14, an anti-fatigue capability of the crossarm assembly 100 can be improved, and lifetime of the crossarm assembly 100 can be prolonged.

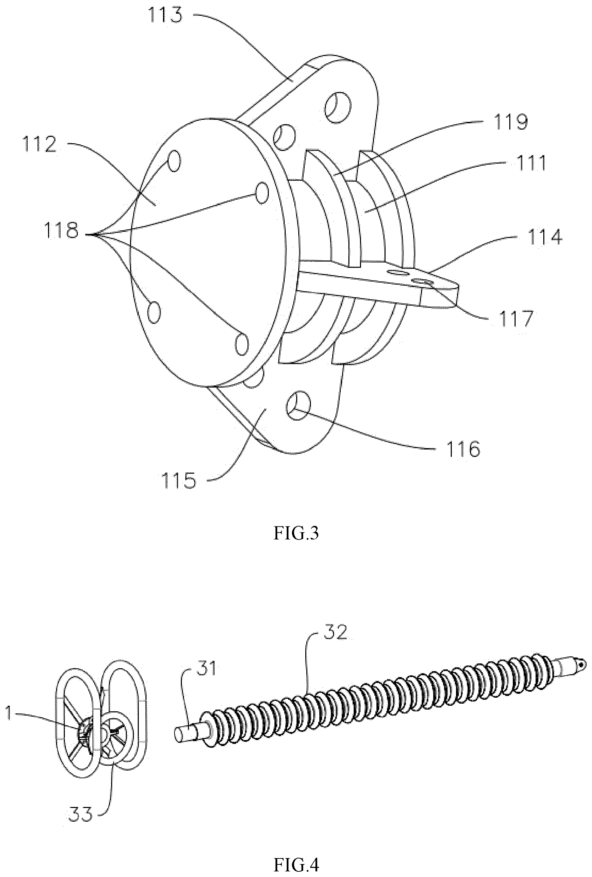

As shown in FIG. 3, the first fitting 11 includes a sleeve 111, a flange 112, a first connecting plate 113, a second connecting plate 114, and a third connecting plate 115.

The sleeve 111 is configured to connect the second insulator 3. Inside the sleeve 111 is a through hole, and the flange 112 closes an end opening of the sleeve 111. As shown in FIG. 4, the second insulator 3 includes an insulating body 31 and a shed housing 32, and the shed housing 32 covers the insulating body 31. In this embodiment, the insulating body 31 is a core rod 31. An end portion of the core rod 31 is inserted into an opening end of the sleeve 111, so that the first fitting 11 sleeves the end portion of the core rod 31. Optionally, the sleeve 111 and the core rod 31 are connected by glue, and the sleeve 111 and the core rod 31 may alternatively be fixedly connected by interference fit, a pin, a screw, or the like.

The first connecting plate 113, the second connecting plate 114, and the third connecting plate 115 are all arranged on an outer wall of the sleeve 111 and arranged at intervals along a circumferential direction of the sleeve 111.

The first connecting plate 113 is located at a top end of the sleeve 111, and the first connecting plate 113 is configured to connect the first insulator 2. For example, the first connecting plate 113 is provided with a first insulator connecting hole, an adjusting fitting such as a hanging board is connected to the end portion of the first insulator 2, the hanging board is provided with a connecting hole, and by inserting a fastener such as a bolt into the first insulator connecting hole of the first connecting plate 113 and the connecting hole of the hanging board at the same time, the first connecting plate 113 is tightly connected to the hanging board, so as to tightly connect the first connecting plate 113 to the first insulator 2. The type and number of the adjusting fitting may be adjusted according to the requirements on design and mounting of the crossarm assembly 100.

Two second connecting plates 114 are provided, which are located on two sides of the sleeve 111 respectively. The second insulator 3 is further provided with a second voltage equalizing device 33, the second voltage equalizing device 33 functions to equalize the electric field, and the second voltage equalizing device 33 is arranged on the second connecting plate 114. For example, the second connecting plate 114 is provided with a voltage equalizing device connecting hole, so as to tightly connect the second connecting plate 114 with the second voltage equalizing device 33.

The third connecting plate 115 is arranged at the bottom of the sleeve 111. The third connecting plate 115 is provided with a mounting hole 116, and the mounting string 12 is connected to the mounting hole 116. Optionally, the first connecting plate 113, the second connecting plate 114, and the third connecting plate 115 are all ear-shaped.

As shown in FIG. 3, in some embodiments, the outer wall of the sleeve 111 is provided with a rib 119 to enhance the mechanical strength of the first fitting 11 and further improve the bearing capacity thereof. Optionally, the rib 119 is located between the connecting plates. For example, one rib 119 extends from the first connecting plate 113 to the second connecting plate 114 along the circumferential direction of the sleeve 111, and/or, one rib 119 extends from the second connecting plate 114 to the third connecting plate 115 along the circumferential direction of the sleeve 111. That is, two adjacent connecting plates are connected through the rib 119 to improve the structural stability of each connecting plate, thereby improving the overall structural stability of the first fitting 11.

In some embodiments, the second connecting plate 114 is provided with a temporary guy wire hole 117. When the crossarm assembly 100 is mounted, the first insulator 2 and the second insulator 3 may rotate unnecessarily, and the temporary guy wire hole 117 can temporarily fix the crossarm assembly 100, which facilitates the mounting of the crossarm assembly 100 on the tower body 200 and improves operation efficiency.

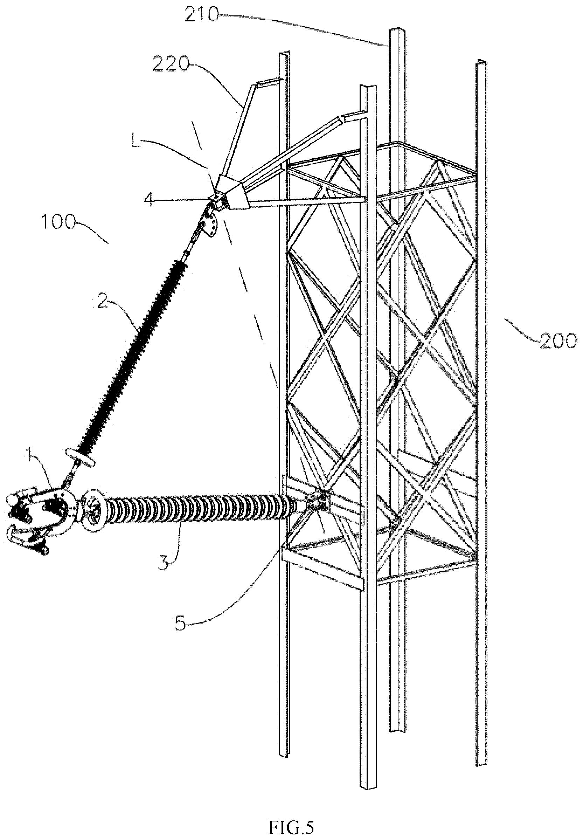

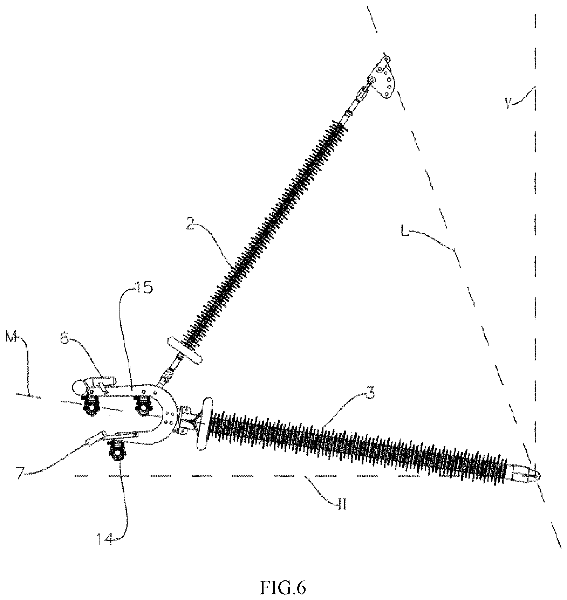

As shown in FIGS. 5 and 6, in some embodiments, the fitting assembly 1 includes a second fitting 15 and a clamp 14.

Both the end portion of the first insulator 2 and the end portion of the second insulator 3 are connected to the second fitting 15. The clamp 14 is mounted on the second fitting 15, and the clamp 14 is configured to fix the conductor.

The clamp 14 is directly mounted to the second fitting 15, which makes the assembly of the crossarm assembly 100 easier, completely saves the mounting string, effectively reduces an interlayer spacing of the conductors, increases a distance from the conductor to the ground or reduces a nominal height, reduces a width of corridor, and makes the stringing more compact, thereby improving the overall economy of the transmission line.

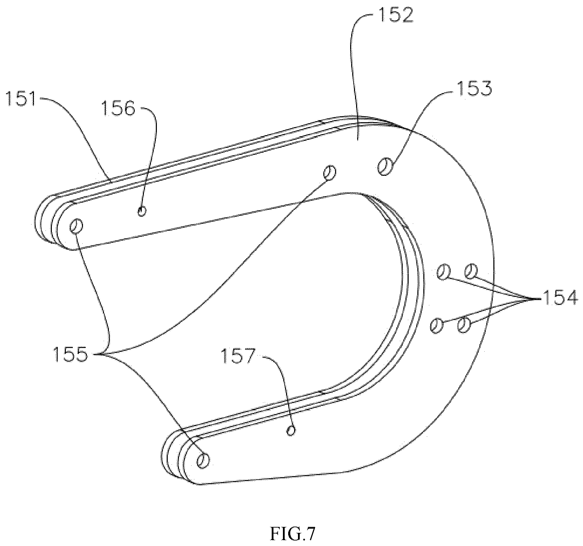

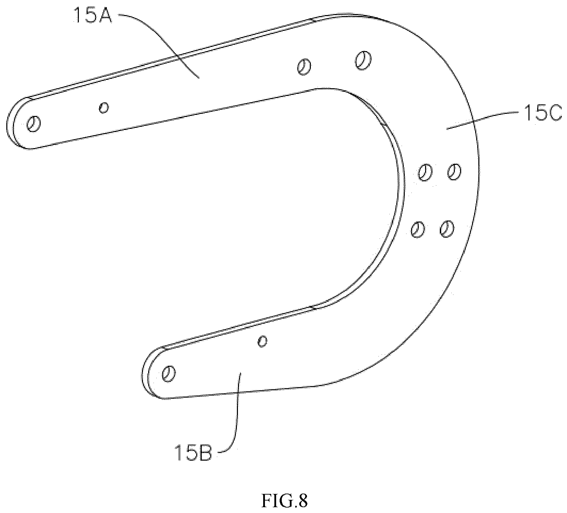

As shown in FIGS. 7 and 8, in some embodiments, the second fitting 15 includes two clamping plates having a same structure, that is, a first clamping plate 151 and a second clamping plate 152, and the first clamping plate 151 and the second clamping plate 152 are arranged parallel to each other.

The clamping plate is roughly C-shaped, and the clamping plate includes a first supporting portion 15A, a second supporting portion 15B, and a bending portion 15C. The second supporting portion 15B is located below the first supporting portion 15A, and the first supporting portion 15A and the second supporting portion 15B are connected to two ends of the bending portion 15C respectively.

The first clamping plate 151 and the second clamping plate 152 are connected to the end portion of the first insulator 2 and the end portion of the second insulator 3 through fasteners. For example, the first clamping plate 151 and the second clamping plate 152 are connected through a fastener such as a screw, the end portion of the first insulator 2 and the end portion of the second insulator 3 are both located between the bending portion 15C of the first clamping plate 151 and the bending portion 15C of the second clamping plate 152, and the bending portion 15C of the first clamping plate 151 and the bending portion 15C of the second clamping plate 152 can clamp the end portion of the first insulator 2 connected to the second fitting 15 and the end portion of the second insulator 3 connected to the second fitting 15. The first insulator 2 and the second insulator 3 are clamped and fixed through the first clamping plate 151 and the second clamping plate 152, which can improve the bending strength of the second fitting 15, thereby improving a bearing capacity of the crossarm assembly 100. The second fitting 15 is configured to mount the conductor, which has a simple structure and facilitates the mounting of the crossarm assembly 100.

Optionally, the bending portion 15C is provided with a first insulator connecting hole 153, an adjusting fitting such as a hanging board is connected to the end portion of the first insulator 2, the hanging board is provided with a connecting hole, and a fastener such as a bolt is inserted into the first insulator connecting hole 153 of the first clamping plate 151, the connecting hole of the hanging board, and the first insulator connecting hole 153 of the second clamping plate 152 sequentially, so that the bending portion 15C of the first clamping plate 151 and the bending portion 15C of the second clamping plate 152 can clamp the hanging board to tightly connect the second fitting 15 to the first insulator 2. The type and number of the adjusting fitting may be adjusted according to the requirements on design and mounting of the crossarm assembly 100.

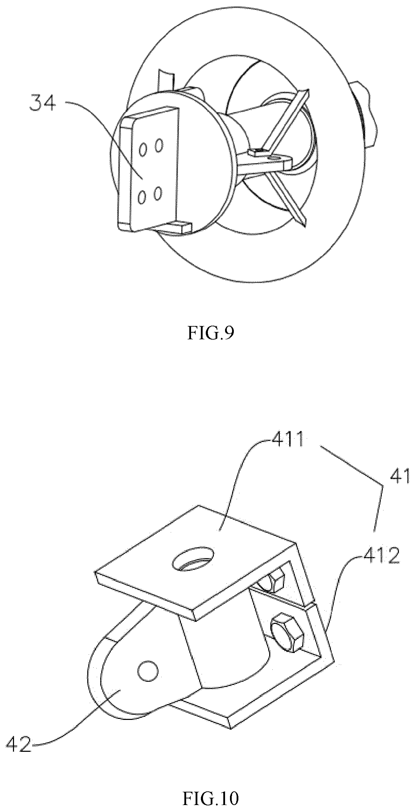

Referring to FIG. 4, the second insulator 3 includes the core rod 31. As shown in FIG. 9, in some embodiments, the end portion of the second insulator 3 is provided with a connecting plate 34. Optionally, an end portion of the core rod 31 is provided with a metal member, and an end surface of the metal member away from the core rod 31 is provided with the connecting plate 34. The connecting plate 34 is located between the bending portion 15C of the first clamping plate 151 and the bending portion 15C of the second clamping plate 152, so that the bending portion 15C of the first clamping plate 151 and the bending portion 15C of the second clamping plate 152 can clamp the connecting plate 34. The bending portion 15C is provided with a second insulator connecting hole 154, so as to tightly connect the second fitting 15 to the second insulator 3.

Both the first supporting portion 15A and the second supporting portion 15B are provided with a mounting hole 155 configured to connect the clamp 14, and the clamp 14 is configured to fix the conductor. Numbers of the mounting hole 155 and the clamp 14 are set according to the requirements on the number of conductor bundling.

In some other embodiments, the second fitting 15 may include only one clamping plate, and the bending portion 15C of the clamping plate is directly fixedly connected to the adjusting fitting connected to the end portion of the first insulator 2 and the connecting plate 34 of the second insulator 3 through a fastener. The shape and number of the clamping plate may be adjusted according to the requirements on the number of conductor bundling and the design and mounting of the crossarm assembly 100, provided that a reliable connection between the first insulator 2 and the second insulator 3 can be realized and a conductor hanging requirement can be met.

A plurality of conductors mounted on one crossarm assembly 100 form a conductor group. When a plurality of crossarm assemblies 100 are arranged at intervals along the vertical direction on the tower body 200, compared with conventional fitting assemblies that the conductors are mounted through fitting strings such as mounting strings and mounting plates, in the fitting assembly 1 according to this embodiment, the conductors are directly mounted through the second fitting 15 and the clamp 14, which saves structures of the fitting strings, can effectively reduce a distance between adjacent conductor groups along the vertical direction on the tower body 200, and is conducive to reducing an overall tower height, thereby improving the economy of the transmission line.

As shown in FIGS. 2 and 6, the crossarm assembly 100 further includes at least one third voltage equalizing device 6. The third voltage equalizing device 6 has a closed annular structure or non-closed arc structure, and the structure of the third voltage equalizing device 6 is set as required. The third voltage equalizing device 6 is arranged on the fitting assembly 1. The third voltage equalizing device 6 functions to equalize the electric field, which improves safety of the crossarm assembly 100. Optionally, an existing voltage equalizing device is selected as the third voltage equalizing device 6.

As shown in FIG. 3, in an embodiment, the flange 112 of the first fitting 11 is provided with a third voltage equalizing device mounting hole 118, and a fastener such as a bolt is inserted into the third voltage equalizing device mounting hole 118 to tightly connect the third voltage equalizing device 6 to the flange 112. In this embodiment, two third voltage equalizing devices 6 are provided, and are arranged on two sides of the flange 112 respectively.

As shown in FIG. 7, in another embodiment, the first supporting portion 15A of the second fitting 15 is provided with a third voltage equalizing device mounting hole 156 configured to mount the third voltage equalizing device 6. Optionally, the third voltage equalizing device mounting hole 156 is located at an end portion of the first supporting portion 15A away from the bending portion 15C.

Optionally, the crossarm assembly 100 further includes at least one fourth voltage equalizing device 7. The fourth voltage equalizing device 7 has a non-closed arc structure. The fourth voltage equalizing device 7 is arranged on the fitting assembly 1. Optionally, the fourth voltage equalizing device 7 is arranged on the first fitting 11 or the second fitting 15. For example, the fourth voltage equalizing device 7 is mounted on the mounting plate 13. Alternatively, the second supporting portion 15B of the second fitting 15 is provided with a fourth voltage equalizing device mounting hole 157 to mount the fourth voltage equalizing device 7 on the second fitting 15. The fitting assembly 1 is provided with the fourth voltage equalizing device 7, which can better equalize the electric field and further improve safety performance of the crossarm assembly 100. The fourth voltage equalizing device 7 may be formed in a shape of semi-ring.

In some embodiments, a rotation axis of the first insulator 2 is collinear with a rotation axis of the second insulator 3. In this embodiment, both the rotation axis of the first insulator 2 and the rotation axis of the second insulator 3 are located on a straight line L. Both the first insulator 2 and the second insulator 3 rotate around the straight line L. When the conductors on two sides of the crossarm assembly 100 are subjected a longitudinal unbalanced tension, the first insulator 2 and the second insulator 3 may deflect, which causes changes in parameters such as a span between the conductors on the two sides. Then, when the first insulator 2 and the second insulator 3 deflect to a proper position, the tensions on the conductors on the two sides reach a new balance, and release of the longitudinal unbalanced tension is completed.

Optionally, both the rotation axis of the first insulator 2 and the rotation axis of the second insulator 3 are located on the straight line L, and the straight line L is inclined relative to the vertical direction V. A rotation trajectory of the conductor hanging end of the crossarm assembly 100 is a circular arc trajectory with a vertical distance from the conductor hanging end to the rotation axis as a radius in a rotation plane perpendicular to the rotation axis. For a rotation axis arranged vertically, the conductor hanging end rotates in a horizontal rotation plane and does not move upwards in the vertical direction. When the rotation axis is inclined relative to the vertical direction V, the rotation plane perpendicular to the rotation axis may be inclined upwards relative to the horizontal direction, so that when the first insulator 2 and the second insulator 3 rotate around the inclined straight line L, the conductor hanging end may tend to move upwards. That is, in the direction in FIG. 1, when the first insulator 2 and the second insulator 3 do not rotate, the conductor hanging end is in a static state and is located at the lowest point; and when the first insulator 2 and the second insulator 3 rotate relative to the tower body 200, the conductor hanging end moves upwards. The conductor hanging end of the crossarm assembly 100 bears a vertical downward load due to gravity of the mounted conductor and the crossarm assembly 100, which can inhibit the upward movement trend of the conductor hanging end, and thus, can inhibit the continuous rotation of the crossarm assembly 100, thereby achieving an effect of preventing an insufficient electrical clearance between the conductor and the tower body 200 due to an excessively large rotation angle of the crossarm assembly 100. Until the first insulator 2 and the second insulator 3 no longer rotate, the crossarm assembly 100 reaches a balanced state. The straight line L is inclined by 10° to 30° relative to the vertical direction.

In some embodiments, an axis of the second insulator 3 is arranged along the horizontal direction H, which is convenient for mounting and wiring of the fitting assembly 1. Specifically, when the second insulator 3 arranged horizontally is connected to the first fitting 11, the fitting assembly 1 may be directly mounted horizontally for conductor hanging, the mounting is easy to operate, and after the mounting, wind deflection interference does not easily occur among the mounting string 12, the mounting plate 13, the clamp 14, the suspended conductor, and the second insulator 3. Since the first supporting portion 15A and the second supporting portion 15B of the second fitting 15 are generally required to be mounted horizontally when hanging the conductor, when the second insulator 3 arranged horizontally is connected to the second fitting 15, there is no need to consider a mounting angle of the second fitting 15 during the design, the fitting assembly 1 can be directly mounted horizontally for conductor hanging, and the design and the mounting are easy to operate.

In some embodiments, an axis M of the second insulator 3 is inclined upwards relative to the horizontal direction H. When a same load is mounted, compared with the second insulator 3 arranged horizontally, the inclined second insulator 3 bears less stress. When bearing the same load, the inclined second insulator 3 may be a smaller insulator, which ensures safety and improves economy.

Optionally, the axis M of the second insulator 3 is inclined upwards by 1° to 30° relative to the horizontal direction H.

As shown in FIG. 10, each of the first hinged member 4 and the second hinged member 5 includes: a base 41 and a rotating block 42. The base 41 is U-shaped as a whole, and the base 41 is tightly connected to the tower body 200 through a fastener such as a screw. The rotating block 42 is rotatably disposed on the base 41. For example, the rotating block 42 is connected to the base 41 through a rotating shaft. The rotating block 42 of the first hinged member 4 is connected to the first insulator 2, and the rotating block 42 of the second hinged member 5 is connected to the second insulator 3, so that the first insulator 2 and the second insulator 3 are rotatable relative to the tower body 200.

Optionally, a length adjusting member is disposed between the first insulator 2 and the rotating block of the first hinged member 4 to facilitate the mounting of the crossarm assembly 100. An existing adjusting fitting may be selected as the length adjusting member.

In some embodiments, the base 41 includes a first base 411 and a second base 412, the first base 411 and the second base 412 are both L-shaped, the first base 411 and the second base 412 are connected to the tower body 200 of the power transmission tower respectively, and the first base 411 and the second base 412 are arranged oppositely to form a rotation space. The rotating block 42 is located in the rotation space. The rotating shaft of the rotating block 42 has an end connected to the first base 411 and another end connected to the second base 412.

Embodiments of the present disclosure further provide a power transmission tower. The power transmission tower includes a tower body 200 and the crossarm assembly 100 as described above. The crossarm assembly 100 is arranged on the tower body 200. The crossarm assembly 100 is configured to mount a conductor.

As shown in FIGS. 1 and 5, in some embodiments, the tower body 200 includes a main body 210 and a support frame 220. Optionally, the main body 210 is made of angle steel, and the support frame 220 is arranged on the side wall of the main body 210.

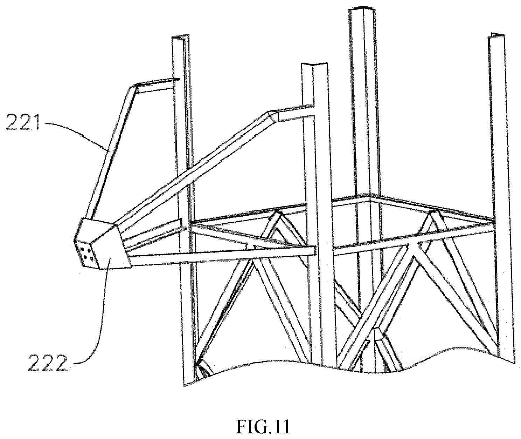

As shown in FIG. 11, the support frame 220 includes: a support rod 221 and an end block 222. An end of the support rod 221 is connected to the main body 210, and another end of the support rod 221 is connected to the end block 222. The first hinged member 4 is arranged on an end surface of the end block 222 away from the main body 210. The end surface of the end block 222 provided with the first hinged member 4 is inclined relative to the vertical direction, so that the straight line L is inclined relative to the vertical direction, which facilitates mounting of the crossarm assembly 100 on the tower body 200. The support rod 221 includes a plurality of rod members, two ends of each of the plurality of rod members are respectively connected to an end surface of the end block 222 close to the main body 210 and the main body 210.

The crossarm assembly 100 in this embodiment is rotatable when subjected to the longitudinal unbalanced tension, so as to release the unbalanced tension and achieve tension rebalancing, which prevents the crossarm assembly 100 or the tower body 200 from bearing a large load, improves safety of the power transmission tower, prolongs lifetime of the power transmission tower, and reduces the cost of the crossarm assembly 100.

The embodiments of the present disclosure are introduced in detail above. Specific examples are used herein to elaborate principles and implementations of the present disclosure, and descriptions of the foregoing embodiments are intended only to help understand the solutions of the present disclosure and a core idea thereof. Therefore, any changes or transformations made by those skilled in the art according to the ideas of the present disclosure and based on specific implementations and application scope of the present disclosure all fall within the scope of the present disclosure. Based on the above, the content of this specification shall not be construed as a limitation on the present disclosure.

## Claims

1. A crossarm assembly, comprising:
a fitting assembly;
a first insulator having an end connected to the fitting assembly;
a second insulator having an end connected to the fitting assembly, the second insulator being located below the first insulator;
a first hinged member connected to another end of the first insulator, the first hinged member being configured to connect a tower body of a power transmission tower, and the first insulator being rotatable relative to the tower body of the power transmission tower; and
a second hinged member connected to another end of the second insulator, the second hinged member being configured to connect the tower body of the power transmission tower, and the second insulator being rotatable relative to the tower body of the power transmission tower.

2. The crossarm assembly of claim 1, wherein the fitting assembly comprises:
a first fitting, the first insulator and the second insulator being both connected to the first fitting;
a mounting string having an end connected to the first fitting;
a mounting plate connected to another end of the mounting string; and
a clamp arranged on the mounting plate.

3. The crossarm assembly of claim 2, wherein the first fitting comprises:
a sleeve configured to connect the second insulator;
a flange arranged at an end of the sleeve;
a first connecting plate arranged on an outer wall of the sleeve, the first connecting plate being connected to the first insulator;
a second connecting plate arranged on the outer wall of the sleeve, the second connecting plate being configured to connected to a voltage equalizing device; and
a third connecting plate arranged on the outer wall of the sleeve, the third connecting plate being connected to the mounting string.

4. The crossarm assembly of claim 3, wherein the outer wall of the sleeve is provided with a rib.

5. The crossarm assembly of claim 3, wherein the second connecting plate is provided with a temporary guy wire hole.

6. The crossarm assembly of claim 1, wherein the fitting assembly comprises:
a second fitting, the first insulator and the second insulator being both connected to the second fitting; and
a clamp arranged on the second fitting.

7. The crossarm assembly of claim 6, wherein the second fitting comprises a first clamping plate and a second clamping plate arranged parallel to each other, the first clamping plate and the second clamping plate each comprise:
a first supporting portion and a second supporting portion, the second supporting portion being located below the first supporting portion; and
a bending portion, the first supporting portion and the second supporting portion being connected to two ends of the bending portion respectively,
wherein the bending portion of the first clamping plate and the bending portion of the second clamping plate clamp an end portion of the first insulator connected to the second fitting and an end portion of the second insulator connected to the second fitting.

8. The crossarm assembly of claim 7, wherein the end portion of the second insulator is provided with a connecting plate, and the bending portion of the first clamping plate and the bending portion of the second clamping plate clamp the connecting plate.

9. The crossarm assembly of claim 7, wherein the bending portion is provided with a first insulator connecting hole and a second insulator connecting hole which are configured to connect the first insulator and the second insulator respectively.

10. The crossarm assembly of claim 7, wherein both the first supporting portion and the second supporting portion are provided with mounting holes configured to connect the clamp.

11. The crossarm assembly of claim 7, wherein the first supporting portion is provided with a third voltage equalizing device mounting hole configured to mount a third voltage equalizing device; and the second supporting portion is provided with a fourth voltage equalizing device mounting hole configured to mount a fourth voltage equalizing device.

12. The crossarm assembly of claim 1, further comprising:
at least one third voltage equalizing device having a closed annular structure or non-closed arc structure, the third voltage equalizing device being arranged on the fitting assembly; and/or
at least one fourth voltage equalizing device having a non-closed arc structure, the fourth voltage equalizing device being arranged on the fitting assembly.

13. The crossarm assembly of claim 1, wherein a rotation axis of the first insulator is collinear with a rotation axis of the second insulator, and the rotation axis of the first insulator and the rotation axis of the second insulator are both inclined relative to a vertical direction.

14. The crossarm assembly of claim 13, wherein the rotation axis of the first insulator and the rotation axis of the second insulator are both inclined by 10° to 30° relative to the vertical direction.

15. The crossarm assembly of claim 1, wherein an axis of the second insulator is inclined upwards relative to a horizontal direction or arranged along the horizontal direction.

16. The crossarm assembly of claim 15, wherein the axis of the second insulator is inclined upwards by 1° to 30° relative to the horizontal direction.

17. The crossarm assembly of any one of claims 1 to 16, wherein the first hinged member and the second hinged member each comprise:
a base configured to connect the tower body of the power transmission tower; and
a rotating block rotatably arranged on the base;
wherein the rotating block of the first hinged member is connected to the first insulator,
and the rotating block of the second hinged member is connected to the second insulator.

18. The crossarm assembly of claim 17, wherein the base comprises a first base and a second base, the first base and the second base are connected to the tower body of the power transmission tower respectively, a rotation space is formed between the first base and the second base, and the rotating block is located in the rotation space.

19. A power transmission tower, comprising:
a tower body; and
the crossarm assembly of any one of claims 1 to 18, the crossarm assembly being arranged on the tower body.

20. The power transmission tower of claim 19, wherein the tower body comprises a main body and a support frame, the support frame is arranged on a side wall of the main body, and the support frame comprises:
a support rod having an end connected to the main body; and
an end block connected to another end of the support rod, the first hinged member being arranged on the end block.
